(19) **Europäisches Patentamt / European Patent Office / Office européen des brevets**

(11) **EP 4 691 991 A1**

(12) **EUROPEAN PATENT APPLICATION**
published in accordance with Art. 153(4) EPC

(43) Date of publication:
**11.02.2026 Bulletin 2026/07**

(21) Application number: **24779294.8**

(22) Date of filing: **08.03.2024**

(51) International Patent Classification (IPC):
**C01G 25/02** (2006.01)    **C04B 35/486** (2006.01)

(52) Cooperative Patent Classification (CPC):
(C-Sets available)
**C04B 35/62204; C01G 25/02; C04B 35/486;
C04B 38/0067; C04B 41/0072; C04B 41/009;
C04B 41/5392; C04B 41/91;** C04B 2235/3217;
C04B 2235/3225; C04B 2235/3246;
C04B 2235/3287; C04B 2235/604;
C04B 2235/6567; C04B 2235/658;    (Cont.)

(86) International application number:
**PCT/JP2024/009012**

(87) International publication number:
**WO 2024/203161 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023057081**

(71) Applicants:
• **National Institute for Materials Science
Tsukuba-shi, Ibaraki 305-0047 (JP)**
• **Tosoh Corporation
Yamaguchi 746-8501 (JP)**

(72) Inventors:
• **OHASHI, Naoki
Tsukuba-shi, Ibaraki 305-0047 (JP)**
• **SEGAWA, Hiroyo
Tsukuba-shi, Ibaraki 305-0047 (JP)**
• **KUBOTA, Ayumu
Tsukuba-shi, Ibaraki 305-0047 (JP)**
• **TSUCHIYA, Satoshi
Shunan-shi, Yamaguchi 746-8501 (JP)**
• **KOBAYASHI, Wataru
Tokyo 105-8623 (JP)**

(74) Representative: **Müller-Boré & Partner
Patentanwälte PartG mbB
Friedenheimer Brücke 21
80639 München (DE)**

(54) **METHOD FOR PRODUCING RECYCLED ZIRCONIA**

(57)    Provided is at least one of a method for producing easily grindable recycled zirconia from a zirconia sintered body and a method for recycling a zirconia sintered body, by which method the zirconia sintered body can be recycled.

A method for producing recycled zirconia includes an ammonia treatment step of subjecting a zirconia sintered body to a heat treatment in an oxygen-containing ammonia atmosphere at a temperature of 800°C or higher and 1200°C or lower. The ammonia treatment step satisfies at least one of a condition (a) below and a condition (b) below.

(a) The oxygen-containing ammonia atmosphere has an oxygen concentration of 0.3 vol% or more.

(b) The oxygen-containing ammonia atmosphere has an oxygen concentration of 0.2 vol% or more, and the zirconia sintered body has a cubic phase ratio of 3.5% or more.

FIG. 1

**(Cont. next page)**

(52) Cooperative Patent Classification (CPC): (Cont.)
C04B 2235/6584; C04B 2235/662;
C04B 2235/765; C04B 2235/77; C04B 2235/785;
C04B 2235/786

C-Sets
**C04B 38/0067, C04B 35/48;**
**C04B 41/009, C04B 35/486**

# EP 4 691 991 A1

## Description

Technical Field

The present disclosure relates to a method for producing recycled zirconia obtained by treating a zirconia sintered body, and further relates to a method for recycling a zirconia sintered body.

Background Art

Zirconia sintered bodies are excellent in conductivity and aesthetic properties in addition to mechanical properties, and thus are used in a wide range of applications such as decorative materials, exterior members of electronic devices, sensors and biomaterials as well as grinding media and structural materials.
From the viewpoint of sustainable development goals (SDGs) in recent years, recycling (regenerating) technology has attracted attention, and sintered bodies of zirconia are also required to be regenerated and reused. The simplest recycling method is to micronize a sintered body by grinding or the like and reuse the resultant as raw powder. For example, as a conventional method for recycling a sintered body of zirconia, a method has been proposed in which a sintered body of zirconia in the form of a sheet having a thickness of less than 0.5 $\mu$m is ground into powder, and the powder is reused as a raw material for the sintered body of zirconia (e.g., PTL 1).

Citation List

Patent Literature

PTL 1: Japanese Unexamined Patent Application Publication No. 2009-263157

Summary of Invention

Technical Problem

Zirconia sintered bodies are generally dense and have high mechanical strength. Therefore, they are very difficult to grind into powder. The method of PTL 1 can be applied to zirconia sintered bodies having an extremely small thickness. However, this method cannot be applied to zirconia having a shape other than plate shapes or zirconia sintered bodies having a thickness of 0.5 $\mu$m or more.
In view of this problem, an object of the present disclosure is to provide at least one of a method for producing easily grindable recycled zirconia from a zirconia sintered body and a method for recycling a sintered body of zirconia, by which method a zirconia sintered body can be recycled.

Solution to Problem

In the present disclosure, the present inventors have studied recycling of a zirconia sintered body having a certain thickness. As a result, the inventors have paid attention to the fact that making a zirconia sintered body porous once allows the zirconia sintered body to be recycled. Furthermore, the inventors have found that a zirconia sintered body can be made porous by heat-treating the zirconia sintered body in a specific atmosphere, and this can provide recycled zirconia.
Thus, the present invention is as set forth in the claims, and the gist of the present disclosure is as follows.

[1] A method for producing recycled zirconia, the method comprising an ammonia treatment step of subjecting a zirconia sintered body to a heat treatment in an oxygen-containing ammonia atmosphere at a temperature of 800°C or higher and 1200°C or lower, wherein the ammonia treatment step satisfies at least one of a condition (a) below and a condition (b) below.

(a) The oxygen-containing ammonia atmosphere has an oxygen concentration of 0.3 vol% or more.
(b) The oxygen-containing ammonia atmosphere has an oxygen concentration of 0.2 vol% or more, and the zirconia sintered body has a cubic phase ratio of 3.5 mass% or more.

[2] The production method according to [1], wherein in the oxygen-containing ammonia atmosphere, an atmospheric gas at a start of the heat treatment of the zirconia sintered body contains at least ammonia ($NH_3$) and oxygen ($O_2$).
[3] The production method according to [2], wherein a total concentration of ammonia ($NH_3$) and oxygen ($O_2$) in the atmospheric gas is 85 vol% or more and 100 vol% or less relative to 100 vol% of the atmospheric gas.

3

[4] The production method according to any one of [1] to [3], wherein the heat treatment is carried out in the oxygen-containing ammonia atmosphere where an atmospheric gas circulates in a system.

[5] The production method according to any one of [1] to [4], wherein in the oxygen-containing ammonia atmosphere, an atmospheric gas during the heat treatment of the zirconia sintered body contains oxygen and at least one of ammonia and active species of ammonia.

[6] The production method according to any one of [1] to [5], wherein the zirconia sintered body has a maximum thickness of 0.5 $\mu$m or more.

[7] The production method according to any one of [1] to [6], wherein the zirconia sintered body has a relative density of 98% or more.

[8] The production method according to any one of [1] to [7], wherein zirconia constituting the zirconia sintered body contains a stabilizing element.

[9] The production method according to [8], wherein the stabilizing element is yttrium.

[10] The production method according to any one of [1] to [9], wherein the zirconia sintered body contains one or more selected from the group consisting of alumina, silica and germania.

[11] A method for recycling a sintered body, the method comprising using recycled zirconia produced by the production method according to any one of [1] to [10] as a raw material of zirconia.


Advantageous Effects of Invention

According to the present disclosure, at least one of a method for producing easily grindable recycled zirconia from a zirconia sintered body and a method for recycling a zirconia sintered body, by which method the zirconia sintered body can be recycled, can be provided.


Brief Description of Drawings

[Fig. 1] Fig. 1 is an SEM observation image of a surface of recycled zirconia obtained in Example 2.
[Fig. 2] Fig. 2 is an SEM observation image of a surface of a zirconia sintered body used in Example 2.
[Fig. 3] Fig. 3 is an SEM observation image of a surface of recycled zirconia obtained in Example 3. Description of Embodiments

Hereinafter, a production method according to the present disclosure will be described with reference to an exemplary embodiment. It is to be understood that the present disclosure includes any combination of configurations and parameters disclosed herein and also includes any combination of upper and lower limits disclosed herein.

A method for producing recycled zirconia according to an embodiment includes a step of subjecting a zirconia sintered body to a heat treatment in an oxygen-containing ammonia atmosphere at a temperature of 800°C or higher and 1200°C or lower (hereinafter also referred to as an "ammonia treatment step"). The ammonia treatment step satisfies at least one of a condition (a) below and a condition (b) below.

(a) The oxygen-containing ammonia atmosphere has an oxygen concentration of 0.3 vol% or more.
(b) The oxygen-containing ammonia atmosphere has an oxygen concentration of 0.2 vol% or more, and the zirconia sintered body has a cubic phase ratio of 3.5 mass% or more.

In the present embodiment, the ammonia treatment step satisfying at least one of the condition (a) and the condition (b) is meant to include satisfying both the condition (a) and the condition (b) in addition to satisfying either the condition (a) or the condition (b).

According to the present embodiment including the ammonia treatment step, even a dense zirconia sintered body can be made porous, and its strength can be reduced. Thus, easily grindable recycled zirconia, that is, a zirconia composition that is easily powdered, furthermore, a zirconia composition that is easily recycled by horizontal recycling, can be produced from a zirconia sintered body. In the present embodiment, recycling of a sintered body includes horizontal recycling and cascade recycling. The horizontal recycling is recycling in which the uses before and after the recycling are each at least one of a sintered body and a precursor thereof, and is distinguished from the cascade recycling in which the use after the recycling is other than these. Examples include one or more selected from the group consisting of a precursor of a sintered body, powder, a green body and a calcined body.

First, constituent features common to the condition (a) and the condition (b) will be described below.

In the ammonia treatment step, a zirconia sintered body is heat-treated in an oxygen-containing ammonia atmosphere at a temperature of 800°C or higher and 1200°C or lower.

The oxygen-containing ammonia atmosphere in the ammonia treatment step may be any atmosphere that is formed as a result of heat treatment of an atmospheric gas at the start of the heat treatment of the zirconia sintered body (hereinafter also referred to as an "initial atmospheric gas"). The initial atmospheric gas may be any atmosphere that is an atmospheric gas containing at least ammonia ($NH_3$) and oxygen ($O_2$). As long as the atmospheric gas containing at least ammonia ($NH_3$) and oxygen ($O_2$) is used as the initial atmospheric gas, the composition of the oxygen-containing ammonia atmosphere may change from that of the initial atmospheric gas during the process of heat-treating the zirconia sintered body. For example, in the oxygen-containing ammonia atmosphere, the atmospheric gas during the heat treatment of the zirconia sintered body is preferably an atmospheric gas containing oxygen and at least one of ammonia and active species of ammonia, more preferably an atmospheric gas containing oxygen and active species of ammonia. Examples of the active species of ammonia include one or more selected from the group consisting of $NH_2^-$, $NH^{2-}$ and $N^{3-}$, and it is preferable to contain at least $N^{3-}$. The active species of ammonia function as active nitrogen. Furthermore, the oxygen-containing ammonia atmosphere may contain any other gas component such as nitrogen ($N_2$). The other gas component may be, for example, one or more selected from the group consisting of carbon monoxide, hydrogen and nitrogen, and may further be nitrogen.

The initial atmospheric gas of the oxygen-containing ammonia atmosphere may be any gas containing at least ammonia ($NH_3$) and oxygen ($O_2$). Specific examples of the initial atmospheric gas include a gas containing ammonia and at least one of air and oxygen and, furthermore, a gas containing ammonia and air (hereinafter also referred to as an "ammonia-air mixture gas").

The total concentration of ammonia ($NH_3$) and oxygen ($O_2$) in the initial atmospheric gas may be, for example, 85 vol% or more and 100 vol% or less relative to 100 vol% of the initial atmospheric gas. From the viewpoint of producing more easily grindable recycled zirconia, the total concentration of ammonia ($NH_3$) and oxygen ($O_2$) in the initial atmospheric gas relative to 100 vol% of the initial atmospheric gas is preferably 90 vol% or more and 100 vol% or less, more preferably 100 vol% (i.e., the initial atmospheric gas consists only of ammonia ($NH_3$) and oxygen ($O_2$)).

Here, when the heat treatment in the ammonia treatment step is carried out in an ammonia atmosphere not containing oxygen or an oxygen-containing ammonia atmosphere having an oxygen concentration not satisfying the conditions (a) and (b) described below, porosification of the zirconia sintered body hardly proceeds. This is probably mainly because when the heat treatment is carried out in such an atmosphere, nitridation of zirconia is promoted, and the formation of zirconia nitride preferentially proceeds. Therefore, when the heat treatment in the ammonia treatment step is carried out in such an atmosphere, easily grindable recycled zirconia cannot be produced.

The heat treatment in the ammonia treatment step may be carried out in an oxygen-containing ammonia atmosphere where the atmospheric gas is stagnant in the system or an oxygen-containing ammonia atmosphere where the atmospheric gas is circulating in the system (hereinafter also referred to as an "oxygen-containing ammonia circulating atmosphere"). To further promote the porosification of the sintered body, the oxygen-containing ammonia circulating atmosphere is preferred. The oxygen-containing ammonia circulating atmosphere may be any atmosphere where an atmospheric gas containing oxygen and ammonia circulates in the system during the heat treatment, and is, for example, an oxygen-containing ammonia atmosphere where the ammonia-air mixture gas as an atmospheric gas circulates in the system (hereinafter also referred to as an "ammonia-air mixture gas circulating atmosphere").

The method of heat-treating the zirconia sintered body in the oxygen-containing ammonia circulating atmosphere may be a method known in the art. For example, a method in which the atmospheric gas is circulated in a reaction tube in which the zirconia sintered body is disposed, and the reaction tube in which the atmospheric gas circulates is heated to thereby heat-treat the zirconia sintered body can be used. One specific heat treatment method is a method in which a setter on which the zirconia sintered body is disposed is disposed in the reaction tube, and heating is then performed while the atmospheric gas is circulated. Any reaction tube and setter may be used as long as side reactions are unlikely to occur during the heat treatment. The setter is, for example, a ceramic setter, preferably one or more selected from the group consisting of a zirconia setter, a mullite setter and an alumina setter, more preferably a zirconia setter. The reaction tube is preferably one or more selected from the group consisting of a zirconia reaction tube, a quartz reaction tube, a mullite reaction tube and an alumina reaction tube, more preferably one or more selected from the group consisting of a zirconia reaction tube, a quartz reaction tube and an alumina reaction tube, still more preferably a quartz reaction tube.

The circulation rate of the atmospheric gas (e.g., the ammonia-air mixture gas) in the oxygen-containing ammonia circulating atmosphere may be, for example, 400 sccm (= ml/min, at 1 atm and 0°C) or more and 800 sccm or less. From the viewpoint of producing more easily grindable recycled zirconia, the circulation rate of the atmospheric gas is preferably 450 sccm or more and 600 sccm or less.

One possible reason why the zirconia sintered body is made porous when the ammonia treatment step satisfies at least one of the condition (a) and the condition (b) is that as a result of the heat treatment in the oxygen-containing ammonia atmosphere, diffusion of active nitrogen into the zirconia sintered body and formation of nitrogen molecules through association occur, so that the zirconia sintered body is made porous. That is, in the heat treatment in the oxygen-containing ammonia atmosphere, active species of ammonia including active nitrogen that have been formed from ammonia diffuse into the zirconia sintered body. Subsequently, the active nitrogen diffused into the zirconia sintered body

becomes gaseous nitrogen ($N_2$). As a result of the generation of nitrogen ($N_2$) inside the zirconia sintered body and release of the generated nitrogen ($N_2$) from the zirconia sintered body, air pores are formed, thus probably making the sintered body porous.

The temperature (heat treatment temperature) in the ammonia treatment step is 800°C or higher and 1200°C or lower. When the heat treatment temperature is outside the range of 800°C or higher and 1200°C or lower, porosification of the zirconia sintered body hardly proceeds, or a very long time is required for porosification. One possible reason for this is that when the heat treatment temperature is lower than 800°C, there is less active nitrogen formed from ammonia, reducing the possibility that nitrogen diffuses into the zirconia sintered body. Another possible reason is that when the heat treatment temperature is higher than 1200°C, decomposition of ammonia proceeds, and diffusion of active nitrogen into the zirconia sintered body hardly proceeds. For these reasons, when the heat treatment temperature in the ammonia treatment step is outside the range of 800°C or higher and 1200°C or lower, easily grindable recycled zirconia cannot be produced.

The heat treatment temperature in the ammonia treatment step may be any temperature at 800°C or higher and 1200°C or lower. From the viewpoint of producing more easily grindable recycled zirconia, the heat treatment temperature is preferably 900°C or higher and 1100°C or lower.

The duration of the heat treatment in the ammonia treatment step may be appropriately set depending on the amount of the zirconia sintered body to be heat-treated in the ammonia treatment step and the performance of a heat treatment furnace, and may be, for example, 5 hours or more, or 10 hours or more. The upper limit of the duration of the heat treatment in the ammonia treatment step may be, for example, 50 hours or less, or 20 hours or less. The heat treatment time may be, for example, 5 hours or more and 50 hours or less, or 10 hours or more and 20 hours or less.

The zirconia sintered body to be heat-treated in the ammonia treatment step (hereinafter also referred to as the "raw sintered body"), which is a sintered body composed of crystal grains of zirconia, may be any sintered body composed mainly of crystal grains of zirconia, and may be a sintered body composed of crystal grains of zirconia and crystal grains of additive components (described later).

The raw sintered body may be any sintered body produced by sintering zirconia particles (powder). The zirconia sintered body may be a sintered body obtained by simply sintering zirconia particles (powder), or may be a sintered body produced by sintering a green body (green compact) of zirconia particles (powder) formed into a desired shape by compression or the like or a sintered body produced by sintering a calcined body obtained by forming and calcining zirconia particles (powder). The forming conditions, sintering conditions and calcining conditions may be conditions known in the art, and are not particularly limited. From the viewpoint of SDGs, the raw sintered body is preferably a zirconia sintered body after being distributed, that is, a used zirconia sintered body (used sintered body) that has been used once as a product in the market.

The crystal phase of the raw sintered body may be any crystal phase composed of at least one of a tetragonal phase and a cubic phase, and is preferably a crystal phase including at least a cubic phase. The crystal phase of the raw sintered body is preferably, for example, a crystal phase composed of a mixed phase of tetragonal and cubic phases or a crystal phase composed of a cubic phase. For the sake of convenience, in the present embodiment, the crystal phase of zirconia can be considered to include a monoclinic phase, a tetragonal phase and a cubic phase.

The raw sintered body is preferably a dense zirconia sintered body that is difficult to micronize only by a physical treatment such as grinding. Specifically, a zirconia sintered body having a relative density of 98% or more is preferred, and a zirconia sintered body having a relative density of 99% or more is more preferred. The relative density is 100% or less or 99.9% or less, and may be, for example, 98.5% or more and 100% or less, or 99.0% or more and 99.9% or less.

In the present embodiment, the "relative density" refers to a density determined from the following formula (3) using an actual density $\rho$ [g/cm$^3$], which is obtained from a volume measured by the Archimedes method and a mass determined by mass measurement, and a true density $\rho 0$ [g/cm$^3$]. When the raw sintered body contains yttrium as a stabilizing element, the relative density of the sintered body can be determined by the following formula (3) using an actual density $\rho$ of the sintered body and a true density $\rho 0$ [g/cm$^3$] of the sintered body determined from the following formula (1) and formula (2). X in the formula (1) and the formula (2) is an yttrium content [mol%] in zirconia (stabilized zirconia).

$$\alpha = [0.5080 + 0.06980X/(100 + X)]^2 \times [0.5195 - 0.06180X/(100 + X)] \; (1) \tag{1}$$

$$\rho 0 = [124.25(100 - X) + 225.81X] / [150.5(100 + X)\alpha] \; (2) \tag{2}$$

$$\mathtt{Relative \; density \; [\%] \; = \; (\rho/\rho0) \; \times \; 100 \quad (3)}$$

When the raw sintered body contains at least a stabilizing element other than yttrium (when the raw sintered body contains yttrium and a stabilizing element other than yttrium as stabilizing elements, or when the raw sintered body contains only a stabilizing element other than yttrium as a stabilizing element), the relative density is determined from the formula (3) using $\rho 0$ [g/cm$^3$] determined from the formula (2') instead of $\rho 0$ determined from the formula (2). When $\rho 0$ determined from the formula (2') is used, as X in the formula (1), the total content X [mol%] of stabilizing elements in zirconia (stabilized zirconia) is used.

$$\rho 0 = [124.25(100 - X) + M_1 X_1 + M_2 X_2 + ... + M_n X_n]/[150.5(100 + X)\alpha] \; (2') \tag{4}$$

In the formula (2'), $M_1$, $M_2$, ... and $M_n$ are the amounts of substances [g/mol] of the stabilizing elements in terms of oxides. $X_1$, $X_2$, ... and $X_n$ are the contents [mol%] of the stabilizing elements, and X is the total content [mol%] of the stabilizing elements in zirconia (stabilized zirconia) and is determined from $X = X_1 + ... + X_n$. The numbers attached to $M_1$, $M_2$, ... and $M_n$ and $X_1$, $X_2$, ... and $X_n$ indicate the kinds of stabilizing elements; n is an integer of 1 or greater, and its upper limit is the number of kinds of stabilizing elements contained in the raw sintered body.

When the raw sintered body contains no stabilizing elements, 0 is substituted for X in the formula (1) and the formula (2), and the true density $\rho 0$ is determined from the formula (2).

When the raw sintered body contains additive components (described later), the "relative density" is determined using a true density $\rho z$ [g/cm$^3$] determined from a formula (2") instead of $\rho 0$ determined from the formula (2) or the formula (2') (i.e., with the formula (3) expressed as Relative density [%] = $(\rho/\rho z) \times 100$).

$$\rho z = 100/[Y_1/M_{add1} + Y_2/M_{add2} + ... + Y_n/M_{addn} + (100 - Y)/\rho 0] \; (2") \tag{2"}$$

In the formula (2"), $M_{add1}$, $M_{add2}$, ... and $M_{addn}$ are true densities [g/cm$^3$] of the additive components in terms of oxides. $Y_1$, $Y_2$, ... and $Y_n$ are the contents [mass%] of the additive components in the sintered body, and Y is the total content [mass%] of the additive elements in zirconia (stabilized zirconia) and is determined from $Y = Y_1 + ... + Y_n$. The numbers attached to $M_{add1}$, $M_{add2}$, ... and $M_{addn}$ and $Y_1$, $Y_2$, ... and $Y_n$ indicate the kinds of additive components; n is an integer of 1 or greater, and its upper limit is the number of kinds of additive components contained in the raw sintered body. $\rho 0$ is a true density [g/cm$^3$] of the sintered body determined from the formula (2) or the formula (2').

Here, the true densities ($M_{add}$) of the additive components in terms of oxides in the formula (2") are, for example, as follows: the true density ($M_{add}$) of alumina, 3.987 g/cm$^3$; the true density of silica, 2.334 g/cm$^3$; the true density of germania, 4.250 g/cm$^3$.

In the raw sintered body, from the viewpoint of producing more easily grindable recycled zirconia, the average crystal grain size of crystal grains is preferably 10 $\mu$m or less, more preferably 5.0 $\mu$m or less, still more preferably 3.0 $\mu$m or less, even more preferably 0.5 $\mu$m or less. The lower limit of the average crystal grain size of crystal grains may be, for example, 0.1 $\mu$m or more. The average crystal grain size of the raw sintered body may be 0.1 $\mu$m or more and 10 $\mu$m or less, 0.1 $\mu$m or more and 5.0 $\mu$m or less, or 0.1 $\mu$m or more and 0.5 $\mu$m or less.

The "average crystal grain size" in the present embodiment can be determined by the planimetric method from a scanning electron microscopic (hereinafter also referred to as "SEM") observation image obtained using a commonly used scanning electron microscope (apparent name: JSM-IT500, manufactured by JEOL Ltd.) under the following measurement conditions.

Acceleration voltage: 10 kV
Observation magnification: 2000$\times$ to 40000$\times$

Prior to the measurement by the planimetric method, a zirconia sintered body sample is pretreated in such a manner that the sample is mirror-polished to a surface roughness Ra $\leq 0.02$ $\mu$m and then thermally etched for 30 minutes in an air atmosphere at a temperature at which grain boundaries of crystal grains are observable (e.g., a temperature 50°C lower than the sintering temperature).

In the planimetric method, a circle of known area is drawn in an SEM observation image of the pretreated sintered body sample, the number of crystal grains (Nc) in the circle and the number of crystal grains (Ni) on the circumference of the circle are measured, and the "average crystal grain size" can be determined from the following formula (4) using the measured Nc and Ni.

$$\text{Average crystal grain size} = (Nc + (1/2) \times Ni)/(A/M^2)...(4) \tag{4}$$

In the above formula (4), Nc is the number of crystal grains in a circle, Ni is the number of crystal grains on the circumference of the circle, A is the area of the circle, and M is the observation magnification of a scanning electron microscope. In Examples described later, a circle of known area was drawn in an SEM observation image such that the sum of Nc and Ni was 125 ± 25. When the sum of Nc and Ni of the drawn circle was less than 125 ± 25, multiple (e.g., 2 or more and 5 or less) SEM observation images were used, and the arithmetic average of values (provisional average crystal grain sizes) obtained from the SEM observation images was determined as the "average crystal grain size".

Zirconia constituting the zirconia sintered body is preferably zirconia containing a stabilizing element, so-called stabilized zirconia, more preferably zirconia containing at least yttrium. The stabilizing element is an element that stabilizes the crystal phase of zirconia, and is, for example, one or more elements selected from the group consisting of calcium (Ca), magnesium (Mg), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), yttrium (Y), ytterbium (Yb) and lutetium (Lu), preferably one or more selected from the group consisting of calcium, magnesium, cerium and yttrium, more preferably yttrium. Hereinafter, stabilized zirconia containing yttrium and others as stabilizing elements is also referred to as, for example, yttrium-stabilized zirconia.

When the zirconia constituting the zirconia sintered body is yttrium-stabilized zirconia, the content of yttrium (hereinafter also referred to as the "yttrium content") in terms of $Y_2O_3$ is preferably 1.5 mol% or more, more preferably 2.5 mol% or more, relative to 100 mol% of yttrium-stabilized zirconia. The upper limit of the yttrium content is preferably 10 mol% or less, more preferably 8 mol% or less. In the case of yttrium-stabilized zirconia with a tetragonal primary phase, the yttrium content is, for example, 2 mol% or more and 6 mol% or less, preferably 2.5 mol% or more and 4 mol% or less. In the case of yttrium-stabilized zirconia with a cubic primary phase, the yttrium content is, for example, more than 6 mol% and 10 mol% or less, preferably 7 mol% or more and 9 mol% or less.

The raw sintered body may be any sintered body that contains zirconia as a principal component (sintered body whose matrix phase is zirconia), and may contain components other than zirconia in addition to zirconia (or stabilized zirconia). Examples of such other components include additive components such as aluminum oxide and inevitable impurities in zirconia such as hafnia ($HfO_2$), and one or two or more of these may be contained. The additive components may be, for example, one or more selected from the group consisting of alumina, silica and germania, or may further be alumina. In the raw sintered body, in calculating values based on compositions, such as the composition and density of the zirconia sintered body, calculations are performed with hafnia regarded as zirconia ($ZrO_2$).

When the raw sintered body contains an aluminum compound as an additive component, the aluminum compound is preferably alumina, and the preferred content of alumina is, for example, 0 mass% or more and 0.5 mass% or less, more preferably more than 0 mass% and 0.5 mass% or less, still more preferably 0.1 mass% or more and 0.3 mass% or less. A content of 0 mass% means not containing the substance.

The content of alumina in the present embodiment is the mass (mass%) of aluminum in terms of $Al_2O_3$ relative to the mass of the zirconia sintered body. The mass of the zirconia sintered body is the total mass of metallic elements and metalloid elements contained in the zirconia sintered body in terms of oxides. The metallic elements and the metalloid elements in terms of oxides are, for example, as follows: zirconium (Zr), $ZrO_2$; calcium (Ca), CaO; magnesium (Mg), MgO; cerium (Ce), $CeO_2$; praseodymium (Pr), $Pr_6O_{11}$; neodymium (Nd), $Nd_2O_3$; samarium (Sm), $Sm_2O_3$; europium (Eu), $Eu_2O_3$; gadolinium (Gd), $Gd_2O_3$; terbium (Tb), $Tb_7O_{11}$; dysprosium (Dy), $Dy_2O_3$; holmium (Ho), $Ho_2O_3$; erbium (Er), $Er_2O_3$; thulium (Tm), $Tm_2O_3$; yttrium (Y), $Y_2O_3$; ytterbium (Yb), $Yb_2O_3$; lutetium (Lu), $Lu_2O_3$; aluminum (Al), $Al_2O_3$; silicon (Si), $SiO_2$; and germanium (Ge), $Ge_2O_3$. These oxides can be used for $M_1$, $M_2$, ... and $M_n$ in the formula (2') and $M_{add1}$, $M_{add2}$, ... and $M_{addn}$ in the formula (2").

The raw sintered body may have any shape, such as one or more selected from the group consisting of a plate-like shape, a columnar shape, a cubic shape, a polyhedral shape, a conical shape, a spherical shape and a substantially spherical shape, or a shape suitable for the intended use. The raw sintered body may be a raw sintered body having an ununiform thickness, or may be a raw sintered body having a uniform thickness. That is, the raw sintered body may have portions with different thicknesses. The raw sintered body may be, for example, a zirconia sintered body having a maximum thickness of 0.5 $\mu$m or more, a zirconia sintered body having a maximum thickness of 100 $\mu$m or more, a zirconia sintered body having a maximum thickness of 1 mm or more, or a zirconia sintered body having a maximum thickness of 1.5 mm or more and 5 mm or less. However, the raw sintered body may be a zirconia sintered body having a maximum thickness of less than 0.5 $\mu$m. When the raw sintered body has a uniform thickness, the raw sintered body may be a zirconia sintered body having a thickness of 0.5 $\mu$m or more, a zirconia sintered body having a thickness of 100 $\mu$m or more, a zirconia sintered body having a thickness of 1 mm or more, or a zirconia sintered body having a thickness of 1.5 mm or more and 5 mm or less. However, the raw sintered body may be a zirconia sintered body having a thickness of less than 0.5 $\mu$m.

Here, the thickness of the raw sintered body is a material thickness, a so-called wall thickness (a distance between opposite surfaces), of the raw sintered body, and is a value determined with a length measuring machine (e.g., a micrometer, vernier calipers or a wall thickness meter). For example, the thickness of a raw sintered body having a plate-like shape, a columnar shape, a cubic shape, a polyhedral shape or a conical shape is a value obtained by measuring the length of the raw sintered body in a direction perpendicular to a surface having a largest area among surfaces of the raw sintered body (in the case where the surface having a largest area is a curved surface, a direction normal to the surface having a largest area). The plate-like shape, the columnar shape, the cubic shape, the polyhedral shape and the conical shape include shapes with edge-rounded surfaces. For example, the thickness of a raw sintered body having a spherical shape or a substantially spherical shape is a value obtained by measuring the length of the raw sintered body in a direction perpendicular to a section having a largest area among sections of the raw sintered body. The maximum thickness may be a value obtained by measuring the thickness of a thickest portion. For example, in the case of a shape with protrusions and depressions, the thickness of a protruding portion is measured.

Next, constituent features that differ between the ammonia treatment step satisfying the condition (a) and the ammonia treatment step satisfying the condition (b) will be described below.

In the ammonia treatment step satisfying the condition (a), the oxygen concentration of the oxygen-containing ammonia atmosphere (hereinafter also referred to simply as the "oxygen concentration") is 0.3 vol% or more. From the viewpoint of producing more easily grindable recycled zirconia, the oxygen concentration in the ammonia treatment step satisfying the condition (a) is preferably 0.4 vol% or more.

In the ammonia treatment step satisfying the condition (a), the upper limit of the oxygen concentration can be, for example, 10 vol% or less, 5 vol% or less, or 1 vol% or less.

The oxygen concentration in the ammonia treatment step satisfying the condition (a) may be any combination of the above upper and lower limits, and can be 0.3 vol% or more and 10 vol% or less, 0.3 vol% or more and 5 vol% or less, or 0.3 vol% or more and 1 vol% or less. From the viewpoint of producing more easily grindable recycled zirconia, the oxygen concentration in the ammonia treatment step satisfying the condition (a) is preferably 0.4 vol% or more and 10 vol% or less, more preferably 0.4 vol% or more and 5 vol% or less, still more preferably 0.4 vol% or more and 1 vol% or less.

The oxygen concentration of the oxygen-containing ammonia atmosphere does not substantially change from the oxygen concentration in the initial atmospheric gas. Therefore, the oxygen concentration of the oxygen-containing ammonia atmosphere can be controlled by adjusting the oxygen concentration in the initial atmospheric gas. In the present embodiment, the oxygen concentration of the initial atmospheric gas (atmospheric gas containing at least ammonia and oxygen) of the oxygen-containing ammonia atmosphere can be regarded as the oxygen concentration of the oxygen-containing ammonia atmosphere. The oxygen concentration of the oxygen-containing ammonia atmosphere can be determined from, for example, the volumes of components introduced to form the initial atmospheric gas (hereinafter also referred to as "introduced components"). As the volumes of the introduced components, for example, volumes at 1 atm. (1013 pa) and 25°C can be used. The oxygen concentration of the oxygen-containing ammonia atmosphere may be determined by measuring the oxygen concentration of the initial atmospheric gas by gas chromatography or using an oximeter. The measurement of the oxygen concentration can be carried out, for example, at 1 atm. (1013 pa) and 25°C.

In the ammonia treatment step satisfying the condition (a), the cubic phase ratio of the raw sintered body is not particularly limited, and the zirconia sintered body need not include a cubic phase (i.e., the cubic phase ratio may be 0 mass%). From the viewpoint of producing more easily grindable recycled zirconia, the cubic phase ratio of the raw sintered body in the ammonia treatment step satisfying the condition (a) is preferably 1 mass% or more. In the ammonia treatment step satisfying the condition (a), the upper limit of the cubic phase ratio of the raw sintered body is, for example, 100 mass% or less, and may be 90 mass% or less. The cubic phase ratio of the raw sintered body in the ammonia treatment step satisfying the condition (a) may be 1 mass% or more and 100 mass% or less, or 1 mass% or more and 90 mass% or less.

The "cubic phase ratio" in the present embodiment, which is the proportion of the cubic phase in the crystal phase of the zirconia sintered body, is determined by subjecting an X-ray diffraction pattern measured using a commonly used X-ray diffractometer (e.g., X'pert PRO MPD, manufactured by Spectris Co., Ltd.) under the following conditions to Rietveld analysis.

Radiation source: CuKα radiation ($\lambda$ = 0.15418 nm)
Scan speed: 0.17°/min
Measurement range: $2\theta$ = 10° to 140°
Acceleration voltage·current: 40 mA·45 kV
Vertical divergence limiting slit: 10 mm
Detector: High-speed detector (X'Celerator)

In the Rietveld analysis, the crystal phase is identified under the following conditions using an analysis program "RIETAN-FP", and the proportion [mass%] of the cubic phase in the obtained total crystal phase is determined as the cubic phase ratio.

Profile function: Split pseudo-Voigt function
Range: $2\theta$ = 10° to 140°
Tetragonal phase: Tetragonal system space group P42/nmc
Cubic phase: Cubic system space group Fm-3m

When the oxygen concentration is 0.3 vol% or more in the ammonia treatment step, porosification of the zirconia sintered body can proceed regardless of the crystal phase of the zirconia sintered body (i.e., regardless of the cubic phase ratio of the zirconia sintered body). Thus, when the production method of the present embodiment includes the ammonia treatment step satisfying the condition (a), easily grindable recycled zirconia can be produced.

On the other hand, in the ammonia treatment step satisfying the condition (b), the oxygen concentration is 0.2 vol% or more. From the viewpoint of producing more easily grindable recycled zirconia, in the ammonia treatment step satisfying the condition (b), the oxygen concentration is preferably 0.4 vol% or more.

In the ammonia treatment step satisfying the condition (b), the upper limit of the oxygen concentration in the ammonia treatment step can be, for example, 10 vol% or less, 5 vol% or less, or 1 vol% or less.

The oxygen concentration in the ammonia treatment step satisfying the condition (b) may be any combination of the above upper and lower limits, and can be 0.2 vol% or more and 10 vol% or less, 0.2 vol% or more and 5 vol% or less, or 0.2 vol% or more and 1 vol% or less. From the viewpoint of producing more easily grindable recycled zirconia, the oxygen concentration in the ammonia treatment step satisfying the condition (b) is preferably 0.4 vol% or more and 10 vol% or less, more preferably 0.4 vol% or more and 5 vol% or less, still more preferably 0.4 vol% or more and 1 vol% or less.

In the ammonia treatment step satisfying the condition (b), the cubic phase ratio of the raw sintered body is 3.5 mass% or more. From the viewpoint of producing more easily grindable recycled zirconia, the cubic phase ratio of the raw sintered body in the ammonia treatment step satisfying the condition (b) is preferably 4 mass% or more, more preferably 5 mass% or more, particularly preferably 10 mass% or more, still more preferably 80 mass% or more, and furthermore 90 mass% or more. In the ammonia treatment step satisfying the condition (b), the upper limit of the cubic phase ratio of the raw sintered body can be, for example, 100 mass% or less. The cubic phase ratio of the raw sintered body in the ammonia treatment step satisfying the condition (b) may be 3.5 mass% or more and 100 mass% or less, 4 mass% or more and 100 mass% or less, 5 mass% or more and 100 mass% or less, 10 mass% or more and 100 mass% or less, 80 mass% or more and 100 mass% or less, or 90 mass% or more and 100 mass% or less.

When the oxygen concentration is less than 0.2 vol% in the ammonia treatment step, porosification of the zirconia sintered body cannot proceed regardless of the cubic phase ratio of the zirconia sintered body. When the oxygen concentration in the ammonia treatment step is 0.2 vol% or more and less than 0.3 vol%, porosification cannot proceed if the zirconia sintered body has a cubic phase ratio of less than 3.5 mass%. This is probably because under such conditions, nitridation of zirconia proceeds, and the formation of zirconia nitride preferentially proceeds.

On the other hand, even when the oxygen concentration is 0.2 vol% or more and less than 0.3 vol%, porosification can proceed if the raw sintered body has a cubic phase ratio of 3.5 mass% or more. This is probably because when the raw sintered body has a high cubic phase ratio, the zirconia sintered body has higher ionic conductivity, which facilitates diffusion of nitrogen (active nitrogen) into the zirconia sintered body. Thus, according to the production method of the present embodiment, if the ammonia treatment step satisfying the condition (b) is included, easily grindable recycled zirconia can be produced.

According to the production method of the present embodiment described above, easily grindable recycled zirconia can be produced from a zirconia sintered body regardless of the shape of the zirconia sintered body. "Recycled zirconia" in the present embodiment refers to a zirconia composition obtained by recycling of a zirconia sintered body, particularly, a zirconia composition that is obtained from a zirconia sintered body and can be used as at least one of a raw material of the sintered body and a precursor of the raw material. In particular, recycled zirconia produced by the production method of the present embodiment is zirconia in a state where a zirconia sintered body is treated so as to be recyclable (reclaimable) as a raw material of zirconia, specifically, zirconia obtained by making the zirconia sintered body porous (hereinafter also referred to as "porous zirconia"). One specific example of porous zirconia is porous zirconia having pores formed in crystal grains, as shown in Examples described later.

Here, the porous zirconia having pores formed in crystal grains is zirconia having intragranular air pores (air pores in crystal grains) formed by heat treatment, and is zirconia whose intragranular air pores formed in crystal grains by heat treatment can be confirmed by comparing the crystal grains before and after the heat treatment by SEM observation. The porous zirconia having pores formed in crystal grains is different from those having intergranular air pores (voids or defects at the interfaces between crystal grains (grain boundaries)) formed by heat treatment, such as those in which only voids can be observed between crystal grains (pores cannot be observed in the crystal grains) and those in which only defects at the peripheries of crystal grains can be observed (pores cannot be observed in the crystal grains). In the porous zirconia having pores formed in crystal grains, voids may be formed between the crystal grains, or the peripheries of the crystal grains may have defects, as long as pores can be observed in the crystal grains.

The texture of the recycled zirconia can be observed using a commonly used scanning electron microscope (apparent name: S-4800, manufactured by Hitachi High-Tech Corporation) under the following conditions. Prior to the observation with the scanning electron microscope, the recycled zirconia is pretreated by performing heat treatment in an air atmosphere at a temperature 50°C lower than the sintering temperature for 30 minutes, and the pretreated recycled zirconia is used as an observation target.

Acceleration voltage: 20 kV

Measurement magnification: 10000×, 30000× or 50000×

The recycled zirconia produced by the production method of the present embodiment may be in any form, and may be in the same form as the sintered body subjected to the ammonia treatment step. Examples of specific forms of the recycled zirconia include one or more forms selected from the group consisting of green bodies, lumps and agglomerates.

The recycled zirconia produced by the production method of the present embodiment can be used as a raw material of zirconia. Thus, according to the present disclosure, a method for recycling a zirconia sintered body, the method comprising using the recycled zirconia produced by the production method of the present embodiment as a raw material of zirconia, can be provided, and furthermore, a method for horizontally recycling a sintered body, the method comprising using the recycled zirconia produced by the production method of the present embodiment as a zirconia raw material for sintered body production, can also be provided. In this method for recycling, the recycled zirconia produced by the production method of the present embodiment may be used as a raw material of zirconia without any processing, but for the production of a product, zirconia used as a raw material is preferably in the form of particles (powder), and thus micronized recycled zirconia (hereinafter also referred to as "recycled zirconia powder") obtained by micronizing produced recycled zirconia by grinding or the like may be used as a raw material of zirconia. In particular, sintered bodies such as zirconia sintered bodies are produced by sintering of zirconia particles (powder). Therefore, in the method for horizontally recycling a sintered body, recycled zirconia powder obtained by micronizing the recycled zirconia produced by the production method of the present embodiment is preferably used as a zirconia raw material for sintered body production. The sintered body produced using the recycled zirconia is a sintered body containing zirconia, and examples include a zirconia sintered body that is a sintered body of zirconia powder and a complex sintered body that is a sintered body of zirconia powder and powder other than zirconia powder (e.g., alumina powder).

EXAMPLES

Hereinafter, the present disclosure will be described with reference to Examples. However, the present disclosure is not limited to these Examples.

(SEM Observation)

Using a scanning electron microscope (S-4800, manufactured by Hitachi High-Tech Corporation), the texture of a zirconia sintered body subjected to ammonia treatment (recycled zirconia) was observed under the following conditions.

Acceleration voltage: 20 kV
Measurement magnification: 10000×, 30000× or 50000×

Prior to the observation with the SEM, the recycled zirconia was pretreated by performing heat treatment in an air atmosphere at a temperature 50°C lower than the sintering temperature for 30 minutes and used as an observation target.

(Raman Spectroscopic Analysis)

Using a confocal Raman microscope (InVIA, manufactured by Renishaw plc.), a Raman spectrum of a zirconia sintered body subjected to ammonia treatment (recycled zirconia) was measured under the following conditions, and a crystal phase was identified from the spectrum shape.
Excitation wavelength: 532 nm

(Average Crystal Grain Size)

For the average crystal grain size of zirconia sintered bodies used in Examples and Comparative Examples, SEM observation images were obtained using a scanning electron microscope (apparent name: JSM-IT500, manufactured by JEOL Ltd.) under the following measurement conditions. Using each of the obtained SEM observation images, the average crystal grain size was determined from the above formula (4) by the planimetric method described above.

Acceleration voltage: 10 kV
Observation magnification: 2000× to 40000×

Prior to the measurement of the average crystal grain size, a zirconia sintered body sample was pretreated in such a manner that the sample was mirror-polished to a surface roughness Ra ≤ 0.02 μm and then thermally etched for 30 minutes in an air atmosphere at a temperature at which grain boundaries of crystal grains were observable (e.g., a temperature 50°C lower than the sintering temperature), and the pretreated zirconia sintered body was used as a measurement target.

(Relative Density)

The relative density of a zirconia sintered body sample was determined by the above formula (3) using an actual density $\rho$, which was obtained from a volume measured by the Archimedes method and a mass determined by mass measurement, and a true density $\rho0$, which was determined from the above formulas (1) to (2") (in the case of using the formula (2"), a true density $\rho z$).

(Identification of Crystal Phase and Cubic Phase Ratio)

For the crystal phase of a zirconia sintered body sample and recycled zirconia, an X-ray diffraction pattern was measured using an X-ray diffractometer (apparent name: X'pert PRO MPD, manufactured by Spectris Co., Ltd.) under the following conditions.

Radiation source: CuK$\alpha$ radiation ($\lambda$ = 0.15418 nm)
Scan speed: 0.17°/min
Measurement range: 2$\theta$ = 10° to 140°
Acceleration voltage·current: 40 mA·45 kV
Vertical divergence limiting slit: 10 mm
Detector: High-speed detector (X'Celerator)

The obtained XRD pattern of the sintered body sample was subjected to Rietveld analysis under the following conditions using RIETAN-FP to identify the crystal phase, and the proportion [mass%] of the cubic phase in the obtained total crystal phase was determined as the cubic phase ratio.

Profile function: Split pseudo-Voigt function
Range: 2$\theta$ = 10° to 140°
Tetragonal phase: Tetragonal system space group P42/nmc
Cubic phase: Cubic system space group Fm-3m

Example 1

5 g of commercially available zirconia powder (yttrium-stabilized zirconia powder having an yttrium content of 3 mol%, product name: TZ-3YS, manufactured by Tosoh Corporation) was packed in a mold having a diameter of 25 mm, subjected to uniaxial press molding at 19.6 MPa, and then subjected to cold isostatic pressing at 196 MPa to obtain a green body. The obtained green body was subjected to pressureless sintering in an air atmosphere at 1500°C for 2 hours to obtain a disk-shaped zirconia sintered body made of yttrium-stabilized zirconia and having a thickness of 3 mm, a relative density of 99.3%, an average crystal grain size of 0.49 $\mu$m and an yttrium content of 3 mol%. The obtained zirconia sintered body had a crystal phase composed of a tetragonal phase and a cubic phase and a cubic phase ratio of 4 mass%.
The obtained zirconia sintered body was placed on an alumina plate, and then the resultant was placed in a tubular furnace equipped with a quartz glass reaction tube. The zirconia sintered body placed in the reaction tube was subjected to a heat treatment (ammonia treatment) under the following conditions.

Heat treatment atmosphere: Ammonia-air mixture gas circulating atmosphere

(Ammonia concentration: 96.2 vol%, oxygen concentration: 0.8 vol%)
(Ammonia-air mixture gas flow rate: 520 sccm)

Heat treatment temperature: 1000°C
Heat treatment time: 16 hours

After the heat treatment (ammonia treatment), the temperature was lowered to room temperature to obtain recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains.

Example 2

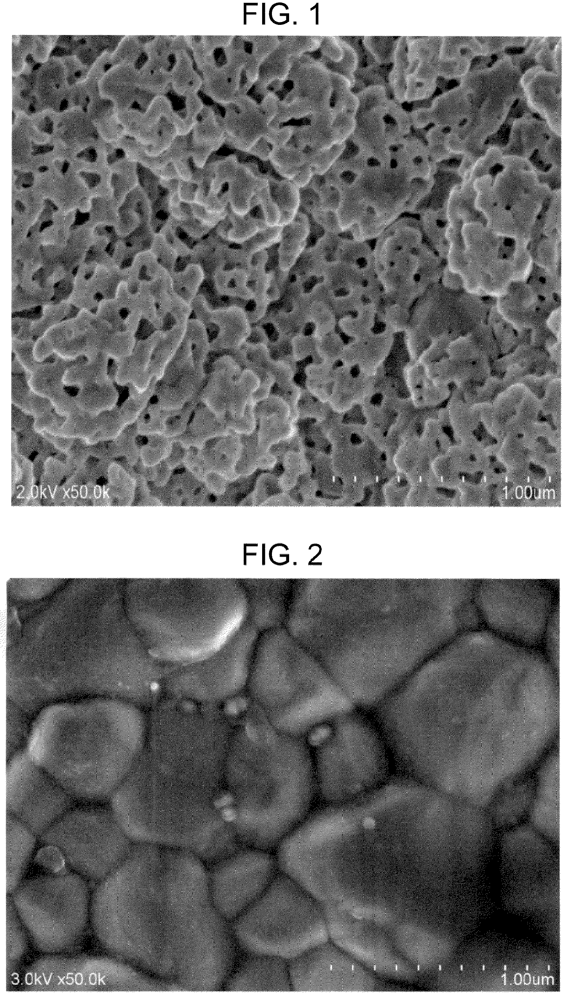

A sintered body was subjected to a heat treatment in the same manner as in Example 1 except that an ammonia-air mixture gas circulating atmosphere having an ammonia concentration of 98.0 vol% and an oxygen concentration of 0.4 vol% was used as the heat treatment atmosphere, thereby obtaining recycled zirconia of this Example. Fig. 2 shows an SEM observation image of a surface of the zirconia sintered body before the heat treatment, and Fig. 1 shows an SEM observation image of a surface of the recycled zirconia obtained by the heat treatment. Pores (air pores) were not observed before the heat treatment, whereas a large number of pores (air pores) were observed in the crystal grains after the heat treatment, confirming that the obtained recycled zirconia was porous zirconia having pores formed in crystal grains. It was visually observed that the recycled zirconia had the same shape as that of the zirconia sintered body used as a raw material.

Example 3

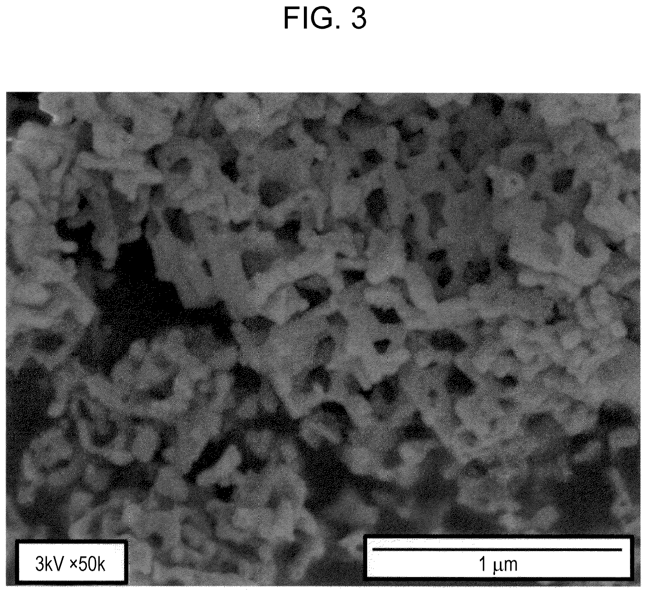

A disk-shaped zirconia sintered body made of alumina-containing yttrium-stabilized zirconia and having a thickness of 3 mm, a relative density of 99.5%, an average crystal grain size of 0.18 $\mu$m, an alumina content of 0.25 mass% and an yttrium content of 3 mol% was obtained in the same manner as in Example 1 except that commercially available zirconia powder (alumina-containing yttrium-stabilized zirconia powder having an alumina content of 0.25 mass% and an yttrium content of 3 mol%, product name: TZ-PX-172, manufactured by Tosoh Corporation) was used and the sinter temperature was 1200°C. The obtained zirconia sintered body had a crystal phase composed of a cubic phase and a tetragonal phase and a cubic phase ratio of 3 mass%. The obtained zirconia sintered body was subjected to a heat treatment in the same manner as in Example 1 to obtain recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains. Fig. 3 shows an SEM observation image of the recycled zirconia of this Example. In the SEM observation image shown in Fig. 3, which was captured at a higher observation magnification than that of the SEM observation image shown in Fig. 1, the state of pores was observed more clearly.

Example 4

A sintered body was subjected to a heat treatment in the same manner as in Example 2 except that a zirconia sintered body prepared in the same manner as in Example 3 was used, thereby obtaining recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains. The recycled zirconia of this Example retained the same shape as that of the sintered body immediately after the heat treatment, but collapsed when taken out of the tubular furnace, resulting in some portions becoming powder.

Example 5

A disk-shaped zirconia sintered body made of yttrium-stabilized zirconia and having a thickness of 3 mm, a relative density of 98.6%, an average crystal grain size of 3.78 $\mu$m and an yttrium content of 8 mol% was obtained in the same manner as in Example 1 except that commercially available zirconia powder (product name: TZ-8YS, manufactured by Tosoh Corporation) was used. The obtained zirconia sintered body had a crystal composed of a cubic phase and a cubic phase ratio of 100 mass%. The obtained zirconia sintered body was subjected to a heat treatment in the same manner as in Example 1 to obtain recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains.

Example 6

A zirconia sintered body was subjected to a heat treatment in the same manner as in Example 1 except that the zirconia sintered body used was obtained in the same manner as in Example 5 and an ammonia-air mixture gas circulating atmosphere having an ammonia concentration of 99.0 vol% and an oxygen concentration of 0.2 vol% was used as the heat treatment atmosphere, thereby obtaining recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains.

Example 7

A zirconia sintered body was subjected to a heat treatment in the same manner as in Example 1 except that the zirconia sintered body used was obtained in the same manner as in Example 5 and an ammonia-air mixture gas circulating atmosphere having an ammonia concentration of 98.0 vol% and an oxygen concentration of 0.4 vol% was used as the heat treatment atmosphere, thereby obtaining recycled zirconia of this Example. Although it was visually observed that the obtained recycled zirconia had the same shape as that of the zirconia sintered body used as a raw material, SEM observations before and after the heat treatment (ammonia treatment) demonstrated that the recycled zirconia was porous zirconia having pores formed in crystal grains.

Comparative Example 1

A zirconia sintered body was subjected to a heat treatment in the same manner as in Example 1 except that the zirconia sintered body used was obtained in the same manner as in Example 3 and an ammonia-air mixture gas circulating atmosphere having an ammonia concentration of 99.0 vol% and an oxygen concentration of 0.2 vol% was used as the heat treatment atmosphere, thereby obtaining recycled zirconia of this Comparative Example. The recycled zirconia of this Comparative Example had the same shape as that before the heat treatment, and the surface texture did not change from before the heat treatment (i.e., the recycled zirconia was not porous zirconia).

[Grindability Evaluation]

The obtained recycled zirconias of Examples and Comparative Examples were evaluated for grindability. Specifically, when the recycled zirconias after the treatment were each held with tweezers, those which showed deformation were judged as grindable (evaluation: ○), and those which did not show deformation of recycled zirconia were judged as difficult to grind (evaluation: ×). The results are shown in Table 1.

[Table 1]

|  | Zirconia sintered body | | | Atmosphere | | | Grindability evaluation |
|---|---|---|---|---|---|---|---|
|  | Yttrium content [mol%] | Relative density [g/cm$^3$] | Cubic phase ratio [mass%] | Temperature [°C] | NH$_3$ concentration [vol%] | Oxygen concentration [vol%] | |
| Example 1 | 3 | 99.3 | 4 | 1000 | 96.2 | 0.8 | ○ |
| Example 2 | 3 | 99.3 | 4 | 1000 | 98.0 | 0.4 | ○ |
| Example 3 | 3 | 99.5 | 3 | 1000 | 96.2 | 0.8 | ○ |
| Example 4 | 3 | 99.5 | 3 | 1000 | 98.0 | 0.4 | ○ |
| Example 5 | 8 | 98.6 | 100 | 1000 | 96.2 | 0.8 | ○ |
| Example 6 | 8 | 98.6 | 100 | 1000 | 99.0 | 0.2 | ○ |
| Example 7 | 8 | 98.6 | 100 | 1000 | 98.0 | 0.4 | ○ |
| Comparative Example 1 | 3 | 99.5 | 3 | 1000 | 99.0 | 0.2 | × |

As shown in Table 1, the results of the grindability evaluation of the recycled zirconias of Examples were ○, whereas the result of the grindability evaluation of the recycled zirconia of Comparative Example was ×. It is understood from these results that according to Examples, easily grindable recycled zirconia can be produced from a zirconia sintered body.

**Claims**

1. A method for producing recycled zirconia, the method comprising an ammonia treatment step of subjecting a zirconia sintered body to a heat treatment in an oxygen-containing ammonia atmosphere at a temperature of 800°C or higher and 1200°C or lower,
wherein the ammonia treatment step satisfies at least one of a condition (a) below and a condition (b) below:

(a) The oxygen-containing ammonia atmosphere has an oxygen concentration of 0.3 vol% or more,
(b) The oxygen-containing ammonia atmosphere has an oxygen concentration of 0.2 vol% or more, and the zirconia sintered body has a cubic phase ratio of 3.5% or more.

2. The production method according to Claim 1, wherein in the oxygen-containing ammonia atmosphere, an atmospheric gas at a start of the heat treatment of the zirconia sintered body contains at least ammonia ($NH_3$) and oxygen ($O_2$).

3. The production method according to Claim 2, wherein a total concentration of ammonia ($NH_3$) and oxygen ($O_2$) in the atmospheric gas is 85 vol% or more and 100 vol% or less relative to 100 vol% of the atmospheric gas.

4. The production method according to any one of Claims 1 to 3, wherein the heat treatment is carried out in the oxygen-containing ammonia atmosphere where an atmospheric gas circulates in a system.

5. The production method according to any one of Claims 1 to 4, wherein in the oxygen-containing ammonia atmosphere, an atmospheric gas during the heat treatment of the zirconia sintered body contains oxygen and at least one of ammonia and active species of ammonia.

6. The production method according to any one of Claims 1 to 5, wherein the zirconia sintered body has a maximum thickness of 0.5 $\mu$m or more.

7. The production method according to any one of Claims 1 to 6, wherein the zirconia sintered body has a relative density of 98% or more.

8. The production method according to any one of Claims 1 to 7, wherein zirconia constituting the zirconia sintered body contains a stabilizing element.

9. The production method according to Claim 8, wherein the stabilizing element is yttrium.

10. The production method according to any one of Claims 1 to 9, wherein the zirconia sintered body contains one or more selected from the group consisting of alumina, silica and germania.

11. A method for recycling a sintered body, the method comprising using recycled zirconia produced by the production method according to any one of Claims 1 to 10 as a raw material of zirconia.

## FIG. 1

## FIG. 2

FIG. 3

3kV ×50k

1 μm

## INTERNATIONAL SEARCH REPORT

| International application No. |
| --- |
| **PCT/JP2024/009012** |

| A. | CLASSIFICATION OF SUBJECT MATTER |
| --- | --- |

*C01G 25/02*(2006.01)i; *C04B 35/486*(2006.01)i
FI:    C01G25/02; C04B35/486

According to International Patent Classification (IPC) or to both national classification and IPC

| B. | FIELDS SEARCHED |
| --- | --- |

Minimum documentation searched (classification system followed by classification symbols)

C01G25/02; C04B35/48-35/493

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580/JSTChina (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 10-218662 A (TORAY INDUSTRIES, INC.) 18 August 1998 (1998-08-18) | 1-11 |
| A | JP 2009-286657 A (NIPPON SHOKUBAI CO., LTD.) 10 December 2009 (2009-12-10) | 1-11 |
| A | JP 63-218582 A (RES DEV CORP OF JAPAN) 12 September 1988 (1988-09-12) | 1-11 |
| A | CN 108529673 A (ZHENGZHOU FANGMING HIGH TEMPERATURE CERAMIC NEW MATERIAL CO., LTD.) 14 September 2018 (2018-09-14) | 1-11 |

☐ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2024** | **28 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/009012**

| Patent document cited in search report | | | Publication date (day/month/year) | Patent family member(s) | Publication date (day/month/year) |
|---|---|---|---|---|---|
| JP | 10-218662 | A | 18 August 1998 | (Family: none) | |
| JP | 2009-286657 | A | 10 December 2009 | (Family: none) | |
| JP | 63-218582 | A | 12 September 1988 | (Family: none) | |
| CN | 108529673 | A | 14 September 2018 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009263157 A